(19) Europäisches Patentamt
European Patent Office
Office européen des brevets

(11) **EP 0 914 209 B2**

(12) **NEUE EUROPÄISCHE PATENTSCHRIFT**

(45) Veröffentlichungstag und Bekanntmachung des Hinweises auf die Entscheidung über den Einspruch:
**03.01.2007 Patentblatt 2007/01**

(51) Int Cl.:
***B03B 1/04*** (2006.01)     ***B07B 1/20*** (2006.01)
***B29B 17/02*** (2006.01)

(45) Hinweis auf die Patenterteilung:
**14.06.2000 Patentblatt 2000/24**

(86) Internationale Anmeldenummer:
**PCT/EP1997/001922**

(21) Anmeldenummer: **97920706.5**

(87) Internationale Veröffentlichungsnummer:
**WO 1997/040940 (06.11.1997 Gazette 1997/47)**

(22) Anmeldetag: **17.04.1997**

(54) **VERFAHREN UND VORRICHTUNG ZUR TRENNUNG VON ZÄHELASTISCHEN MATERIALIEN WIE KUNSTSTOFFEN UND VON UNTER MECHANISCHER BEANSPRUCHUNG ZERFASERNDEN STOFFEN WIE PAPIER**

PROCESS AND DEVICE FOR THE SEPARATION OF VISCOPLASTIC MATERIALS SUCH AS PLASTICS FROM MATERIALS SUCH AS PAPER WHICH CAN BE DEFIBRATED BY MECHANICAL ACTION

PROCEDE ET DISPOSITIF POUR SEPARER DES MATERIAUX VISCOPLASTIQUES TELS QUE DES MATIERES PLASTIQUES, ET DES MATIERES SE DEFIBRANT SOUS L'EFFET DE SOLLICITATIONS MECANIQUES, TELLES QUE LE PAPIER

(84) Benannte Vertragsstaaten:
**AT BE CH DE DK ES FI FR GB GR IE IT LI LU MC NL PT SE**
Benannte Erstreckungsstaaten:
**LT LV RO**

(30) Priorität: **25.04.1996 DE 19616623**

(43) Veröffentlichungstag der Anmeldung:
**12.05.1999 Patentblatt 1999/19**

(73) Patentinhaber: **"Der Grüne Punkt"**
**Duales System Deutschland Aktiengesellschaft**
**51145 Köln (DE)**

(72) Erfinder:
• **FAHRBACH, Gerhard**
  **D-68723 Plankstadt (DE)**
• **SCHNETTLER, Heinz, Reiner**
  **D-59759 Arnsberg (DE)**

(74) Vertreter: **Tönhardt, Marion**
**Forrester & Boehmert,**
**Pettenkoferstrasse 20-22**
**80336 München (DE)**

(56) Entgegenhaltungen:
DE-A- 4 231 100        DE-A- 19 509 808
US-A- 3 941 689        US-A- 4 245 999
US-A- 4 440 635

EP 0 914 209 B2

**Beschreibung**

Die Erfindung betrifft ein Verfahren zur Trennung von bei Normaltemperatur zähelastischen Materialien wie Kunststoffen und Kautschuk von anderen Materialien, die unter großer mechanischer Beanspruchung zerfasern, nämlich, Papier, Pappe, Karton oder andere zellulosefaserhaltige Produkte. Die Erfindung betrifft auch die Verwendung einer Vorrichtung zur trockenen Trennung von zähelastischen Materialien, wie Kunststoffen und Kautschuk, von unter mechanischer Beanspruchung zerfasernden Materialien, bei der ein Massestrom aus Fasermaterialien und ein Massestrom aus zähelastischen Materialien getrennt abgezogen wird. Eine solche Vorrichtung ist durch eine Vorbenutzung aus dem Jahr 1987 bekannt; sie weist einen zylindrischen Siebkorb mit scharfkantigen Bohrungen auf, die scharfen Kanten sind dabei zur Innenseite des Siebkorbes gerichtet. Im Siebkorb ist eine drehbare Antriebswelle mit pendelnd aufgehängten Schaufeln angeordnet, die mit Drehzahlen 946, 1064 und 1192 Umdrehungen pro Minute betreibbar ist.

Insbesondere bei der Abfallentsorgung und Wiedergewinnung der in den Abfällen enthaltenen Stoffe stellt die Trennung von Kunststoffen und Papier ein erhebliches Problem dar. Derartige Mischabfälle, die sowohl Kunststoffe als auch Papier oder andere Zelluloseprodukte enthalten, fallen in großen Mengen an. So weisen z. B. die vorsortierten Kunststoffverpackungen aus den Sammlungen des Dualen Systems, insbesondere die sogenannte Mischfraktion, einen nicht unerheblichen Papieranteil aus, der sich zusammensetzt aus Papieretiketten, Fehlzuordnung bei der Sortierung und Papier-Kunststoffverbundmaterialien.

Bisher erfolgte die Trennung von Kunststoff, Kautschuk und anderen zähelastischen Materialien von zellulosefaserhaltigen Materialien wie Papier, Pappe und Karton im Naßtrennverfahren durch weitgehende Auflösung der Fasermatrix und anschließende Trennung in mindestens zwei Stoffströme, nämlich den zelluslosehaltigen Schlamm mit hohem Wassergehalt und den wasserunlöslichen Kunststoff. Dieses Verfahren erfordert einen erheblichen energetischen und maschinellen Aufwand. Die Papierauflösung erfolgt hier beispielsweise in einer Naßmühle, wobei zum Zerkleinerungsvorgang ein Vielfaches des Gewichtes an Kunststoff und Papier an Wasser zugegeben wird. Hier erfordern insbesondere die zu beschleunigenden Wassermassen sehr viel Energie. Zur Trennung von Papierfasern und dem entstandenen Schlamm aus Füllstoffen, Schmutz oder anderen Stoffen vom Kunststoff werden sogenannte Friktionsscheider eingesetzt. In jedem Falle ist anschließend der faserreiche Massestrom zu entwässern, z. B. mit Schwing- oder Bodensieben. Zusätzlich wird der Wassergehalt üblicherweise durch Pressen wie Kammerfilterpressen reduziert, wobei immer noch ein hoher Wassergehalt von mehr als 50 % im Produkt verbleibt. Falls die papierfaserreiche Masse nicht zu verwerten ist, was bei Altmaterialien der Regelfall ist, so fallen durch den hohen Wassergehalt entweder hohe Deponiekosten oder im Falle der thermischen Nutzung der Abfälle ein erheblicher Trocknungsaufwand an. Auch der Kunststoff ist, insbesondere wenn er reich an Folien ist, wie das z. B. bei der Kombination aus den häufig vorkommenden Polyethylenfolien mit Papier resultiert, zu entwässern, was in erster Linie mit mechanischen Trocknern durchgeführt wird. Hierzu werden modifizierte Zentrifugen oder Schleudern eingesetzt. Gegebenenfalls ist auch noch eine thermische (Nach-)Trocknung erforderlich, so daß insgesamt der Trennungsaufwand erhebliche Kosten verursacht und wegen des hohen Energieaufwandes ökologisch unvorteilhaft ist.

Hierzu wurden zahlreiche Untersuchungen durchgeführt. Beispielhaft sind hier genannt: Louis Jetten, Stoffliches Kunststoffrecycling und die Rolle des Wassers in Aufbereitungstechnik beim Verwerten von Kunststoffen, VDI-Verlag, Düsseldorf, 1993 und Technologiestudie: Stoffliches Kunststoffrecycling, Teil 2, Herausgeber EWvK, Entwicklungsgesellschaft für die Wiederverwertung von Kunststoffen, Wiesbaden, 1992.

Es sind auch bereits Verfahren zur trockenen Trennung von Papier und Kunststoffen bekannt, die unter Nutzung von elektrostatischer Aufladung arbeiten. Hier sei die Trennung im Freifallscheider genannt, die z. B., in DE 32 27 874 und DE 42 25 977 beschrieben wird. Dieses Verfahren hat erhebliche Nachteile. Das Aufgabegut muß hier ganz bestimmte Voraussetzungen an die geometrischen Abmaße erfüllen. Es werden auch hohe Anforderungen an den Trockengrad des Aufgabegutes gestellt. Der operative Aufwand ist erheblich. Zudem lassen sich mit diesem Verfahren keinen kraft- und formschlüssigen Verbundmaterialien trennen.

Die US 4,440,635 zeigt ein Naßverfahren zur Trennung von Papier und Kunststoff, bei dem das zu verarbeitende Material durch kontrollierte Zugabe von Feuchtigkeit auf einen vorbestimmten Feuchtigkeitsgehalt gebracht wird, wodurch vermieden werden soll, daß überschüssige Feuchtigkeit zugeführt wird. Der Aufbau eines unterschiedlichen Feuchtigkeitsgehaltes der zu trennenden Materialien aufgrund ihrer unterschiedlichen Feuchtigkeitsabsorptionsfähigkeit ist hier jedoch wie bei allen Naßsystemen weiterhin der wesentliche Aspekt des Verfahrens.

Die US 3,941,689 offenbart eine Vorrichtung zur Zerkleinerung und Sortierung unterschiedlicher aber in sich im wesentlichen homogener Abfallprodukte. Dabei werden die aufgegebenen Teile in einem mehrstufigen Verfahren sukzessive in Abhängigkeit von ihrer Stabilität zerkleinert bzw. pulverisiert und durch Absiebung voneinander getrennt.

Aufgabe der Erfindung ist es daher, ein ökologisch vorteilhaftes, verfahrenstechnisch einfaches Verfahren zur Trennung von zähelastischen Materialien wie Kunststoffen und Kautschuk von unter hoher mechanischer Beanspruchung zerfasernden Stoffen wie z. B. Papier, Pappe und Karton bereitzustellen. Als Beispiele für Kunststoffe sind zu nennen: LDPE, HDPE, PP, Polystyrol, PVC, PET und ABS.

Es wurde nun überraschenderweise gefunden, daß es möglich ist, auf verfahrenstechnisch einfache Weise zähelastische Materialien wie Kunststoffe und Kautschuk von faserhaltigen Materialien wie Papier trokken durch Beaufschlagung der Mischung aus Kunststoffen und faserhaltigem Material mit hohen Beschleunigungs- und Aufprallkräften zu trennen, wobei das faserhaltige Material unter Einwirkung der Kräfte zerfasert und durch die entsprechenden Öffnungen eines Siebkorbes austritt, während der nichtzerfasernde Kunststoff im Innern des Gehäuses verbleibt und in Axialrichtung ausgetragen wird. Die Anwendung von Beschleunigungs- und Aufprallkräften oder die Verwendung einer Zentrifuge zur Trockentrennung von Papier- und Kunststoff ist als überraschend anzusehen, da bisher Zentrifugen stets zur Trennung von Fest-Flüssig-Phasen oder Flüssig-Flüssig-Phasen eingesetzt worden sind.

Gegenstand der Erfindung ist somit ein Verfahren zur trockenen Trennung von zähelastischen Materialien wie Kunststoffen und Kautschuk, von unter mechanischer Beanspruchung zerfasernden Materialien, nämlich Papier, Pappe, Karton oder anderen zellulosehaltigen Materialien, wie in Anspruch 1 definiert, wobei die zu trennenden Materialien hohen radialen, axialen und tangentialen Beschleunigungskräften und Aufprallkräften unterworfen werden und ein Massestrom aus Fasermaterial und ein Massestrom aus zähelastischen Materialien getrennt abgezogen wird, dadurch gekennzeichnet, daß die zähelastischen Materialien und die zelluloschaltigen Materialien im wesentlichen als Verbundmaterialien vorliegen und lediglich das faserhaltige Material unter Einwirkung der Kräfte zerfasert und vom zähelastischen Material abgetrennt wird, wobei die zähelastischen Materialien im wesentlichen in einem unzerkleinerten Zustand in dem Massestrom abgezogen werden.

Das zu trennende Material wird bevorzugt auf eine Größe ≤ 50 mm vorzerkleinert.

Gegenstand der Erfindung ist ferner die Verwendung einer Vorrichtung der eingangs genannten Art, wie in Anspruch 7 definiert, zur Trennung von Verbundmaterialien aus zähelastischen und unter mechanischer Beanspruchung zerfasernden Materialien, wobei eine Rotationsgeschwindigkeit der Schaufeln in einem Bereich von 1200 bis 1800 Umdrehungen pro Minute so einstellbar ist, daß lediglich das faserhaltige Material zerfasert und vom zähelastischen Material abgetrennt wird, wobei die zähelastischen Materialien im wesentlichen in einem unzerkleinerten Zustand in einem getrennten Massestrom abgezogen werden.

Die Antriebswelle wird z. B. über einen Flansch (5) und mit einem Riemtrieb mit E-Motor (nicht gezeichnet) angetrieben. Der Schaufeldurchmesser ist im Verhältnis so bemessen, daß zwischen Schaufelende und Gehäuse ein Spalt verbleibt. In Abhängigkeit von der Geometrie kann die Größe des zu zerkleinemden Materials variiert werden.

Aufgabeseitig weisen die ersten Schaufeln im Gehäuse zwecks besserer Verteilung der aufgegeben zu trennenden Materialmischung im Gehäuse einen geringeren Durchmesser als die nachfolgenden Schaufeln auf.

Gehäuse und innenliegende rotierende Welle mit Schaufeln sind in einem Kasten (6) angeordnet, der eine Aufgabeöffnung (7) für die zu trennende Materialmischung und am anderen Ende eine Austrittsöffnung (8) für den im Inneren der Trommel verbleibenden und durch die rotierenden Schaufeln geförderten Kunststoff aufweist. Der Kasten (6) weist ferner eine Austrittsöffnung (9) für das abgetrennte Papier auf. Zur besseren Abtrennung des Papiers kann ein (nicht gezeichneter) umlaufender Schaber vorgesehen werden.

Das Gehäuse ist bevorzugt aus einem hochfesten und korrosionsbeständigen Material wie Edelstahl, ebenso die Antriebswelle und Schaufeln.

Die Bohrungen (2) bzw. Auslässe an der Peripherie des Siebkorbes (1) weisen scharfe Kanten (nicht gezeichnet!) auf, die zur besseren Zerfaserung des durch die Bohrung des Gehäuses nach außen gegen den Siebkorb (1) geschleuderten zerkleinerten Papiers dienen, wobei der Siebkorb (1) von den Außenwänden des Kastens (6) getragen wird.

Um die Fortbewegung der Teilchen in axialer Richtung bei ausreichender Verweilzeit in der Vorrichtung zu gewährleisten, sind die Schaufeln bevorzugt angestellt, wobei z. B. für die Kunststoffmischfraktion aus dem Dualen System Anstellwinkel im Bereich von 5 bis 7 Grad geeignet sind.

Die innenliegende Welle mit Schaufeln rotiert mit Geschwindigkeiten im Bereich von 1200 bis 1800 Umdrehungen/Minute, wobei die Umdrehungszahl in Abhängigkeit vom eingesetzten Stoffgemisch eingestellt wird. Die Verweilzeit beträgt 10 s. bis 2 min.

Die Auslaßöffnungen variieren in ihrer Größe je nach Korngröße des Aufgabegutes und gewünschten Trenngrades zwischen 2 und 7 mm.

Die bevorzugte Form des Siebkorbes (1) ist ein Polygon, das gleichschenkelige oder ungleichschenkelige Flächen aufweisen kann. Es hat sich gezeigt hat, daß, wenn sich der Siebkorb aus polygonartigen Flächen zusammensetzt, die Trennwirkung gegenüber einem zylindrischen Siebkorb wesentlich besser ist.

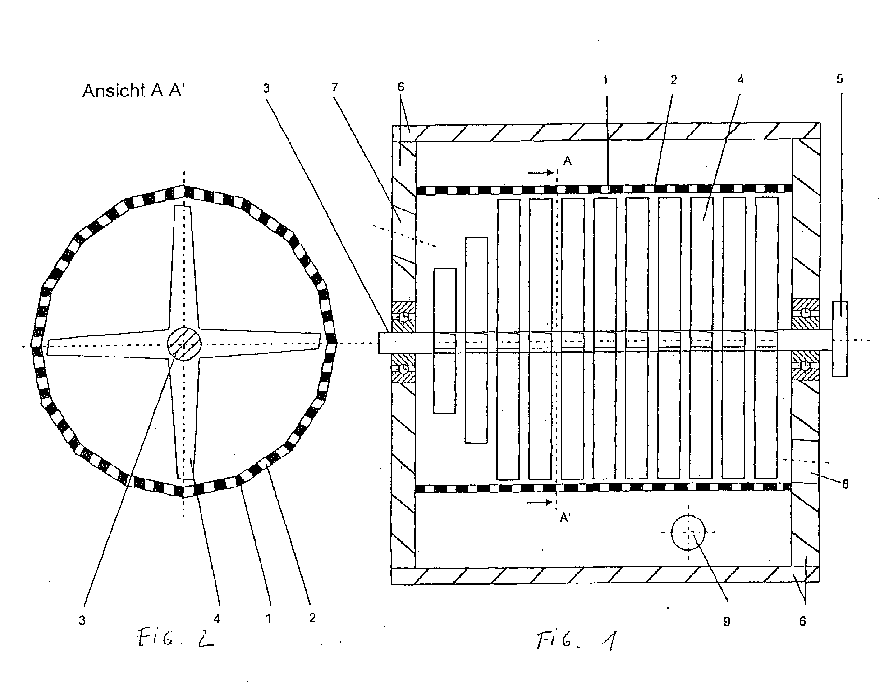

Die Funktion von Verfahren und eine für die Verwendung geeignete Vorrichtung werden beispielhaft anhand der beigefügten Zeichnungen erläutert, wobei Figur 1 einen Längsschnitt durch eine Vorrichtung zur Durchführung des Verfahrens und Figur 2 einen Querschnitt durch Figur 1 längs der Linie AA' bedeutet. Durch die Aufgabeöffnung (7) werden die Verbunde aus Kunststoff und Papier gegeben und durch die ersten Schaufeln mit geringerem Durchmesser als folgende Schaufeln (4) im inneren des Siebkorbes verteilt. Die durch einen nicht gezeichneten Antrieb in Rotation versetzte Welle (3) mit den Schaufeln (4) erzeugt eine Beschleunigung und einen Aufprall der Teilchen, welcher letztendlich zur Ansammlung des aufgefaserten Papiers am Siebkorb (1) und dann zum Austritt durch die Bohrungen (2) führt. Gleichzeitig wandert der Kunststoff in axialer Richtung weiter und wird durch die Austrittöffnung (8) abgezogen. Das Papier, das sich im Raum, der durch den Kasten (6) und Siebkorb (1) gebildet wird, ansammelt, wird über die Austrittöffnung (9) mittels einer pneumatischen Absaugung (nicht gezeichnet) abgesaugt.

Eine Vorrichtung hat beispielsweise folgende Dimensionen: Länge: 1500 mm, Flügeldurchmesser: 950 mm (variabel), Spaltweite zwischen Flügelende und Gehäusewandung nach Gestalt des Gehäuses: max. 25 mm, Zahl der Flügel: 4 x 11, Leistungsaufnahme der Vorrichtung 50 - 80 Kilowatt. Auslaßöffnungen des Siebkorbes: 5 mm, Durchsatz: $\frac{11}{h}$.

**Patentansprüche**

1. Verfahren zur trockenen Trennung von zähelastischen Materialien, wie Kunststoffen und Kautschuk, von unter mechanischer Beanspruchung zerfasernden Materialien, nämlich Papier, Pappe, Karton und andere zelluloschaltige Materialien, wobei die zu trennenden Materialien hohen radialen, axialen und tangentialen Beschleunigungskräften und Aufprallkräften unterworfen werden und ein Massestrom aus Fasermaterial und ein Massestrom aus zähelastischen Materialien getrennt abgezogen wird, **dadurch gekennzeichnet, daß** die zähelastischen Materialien und die zelluloschaltige Materialien im wesentlichen als Verbundmaterialien vorliegen und lediglich das faserhaltige Material unter Einwirkung der Kräfte zerfasert und vom zähelastischen Material abgetrennt wird, wobei die zähelastischen Materialien im wesentlichen in einem unzerkleinerten Zustand in dem Massestrom abgezogen werden.

2. Verfahren nach Anspruch 1, **dadurch gekennzeichnet, daß** die zu trennende Mischung auf Teilchengrößen ≤ 50 mm vorzerkleinert wird.

3. Verfahren nach einem der Ansprüche 1 oder 2, **dadurch gekennzeichnet, daß** das faserhaltige Material innerhalb eines Gehäuses (1) zerfasert wird und das zerfaserte Material, insbesondere Papier, durch Bohrungen oder Auslässe (2) in einer Mantelfläche des Gehäuses (1) nach außen tritt, während die zähelastischen Materialien innerhalb des Gehäuses (1) verbleiben und an dessen Ende als getrennter Strom abgezogen werden.

4. Verfahren nach Anspruch 3, **dadurch gekennzeichnet, daß** durch an den Bohrungen oder Auslässen (2) an einer Innenseite des Gehäuses (1) angeordnete scharfe Kanten die zerfasernde Wirkung verstärkt wird.

5. Verfahren nach Anspruch 3 oder 4, **dadurch gekennzeichnet, daß** durch die Ausbildung des Gehäuses (1) in einer polygonalen Form die zerfasernde Wirkung verstärkt wird.

6. Verfahren nach einem der Ansprüche 3 bis 5, **dadurch gekennzeichnet, daß** der Fluß/Transport des Materials innerhalb des Gehäuses (1) durch den direkten Einfluß der die radialen, axialen und tangentialen Beschleunigungskräfte ausübenden Vorrichtungen (1, 3, 4) hervorgerufen wird.

7. Verwendung einer Vorrichtung zur trockenen Trennung von zähelastischen Materialien, wie Kunststoffen und Kautschuk, von unter mechanischer Beanspruchung zerfasernden Materialien, insbesondere Papier, Pappe, Karton und andere zelluloschaltige Materialien wobei die zu trennenden Materialien hohen radialen, axialen und tangentialen Beschleunigungskräften und Aufprallkräften unterworfen werden und ein Massestrom aus Fasermaterial und ein Massestrom aus zähelastischen Materialien getrennt abgezogen wird, bestehend aus einem Siebkorb (1), welcher eine im wesentlichen zylindrische Gestalt aufweist und welcher in einem Mantel Bohrungen oder Auslässe (2) für den Durchtritt des zerfasernden Materials aufweist, wobei die Bohrungen (2) an einer Innenseite des Siebkorbes (1) scharfe Kanten zur Verstärkung der Zerfaserungswirkung aufweisen und wobei in einem Innenbereich des Siebkorbes koaxial eine drehbare Antriebswelle (3) angeordnet ist, auf welcher mit der Antriebswelle verbundene Schaufeln (4) befestigt sind, wobei die zähelastischen Materialien im wesentlichen in einem unzerkleinerten Zustand in einem getrennten Massestrom abgezogen werden, zur Trennung von Verbundmaterialien aus Zähelastischen und unter mechanischer Beanspruchung zerfasernden Materialien, wobei eine Rotationsgeschwindigkeit der Schaufeln in einem Bereich von 1200 bis 1800 Umdrehungen pro Minute so einstellbar ist, daß lediglich das faserhaltige Material zerfasert und vom zähelastischen Material abgetrennt wird,

8. Verwendung nach Anspruch 7, **dadurch gekennzeichnet, daß** der Siebkorb eine polygonale Gestalt aufweist.

9. Verwendung nach Anspruch 7 oder 8, **dadurch gekennzeichnet, daß** die Schaufeln (4) starr mit der Antriebswelle verbunden sind.

10. Verwendung nach einem der Ansprüche 7 bis 9, **dadurch gekennzeichnet, daß** die Schaufeln (4) in einem Anstellwinkel von bevorzugt 5 - 7 Grad an der Antriebswelle befestigt sind.

**11.** Verwendung nach einem der Ansprüche 7 bis 10, **dadurch gekennzeichnet, daß** die Schaufeln (4) auf der Aufgabeseite einen geringeren Durchmesser als die nachfolgenden Schaufeln aufweisen.

**12.** Verwendung nach einem der Ansprüche 7 bis 11, **dadurch gekennzeichnet, daß** die Schaufeln (4) derart auf der Antriebswelle angeordnet sind, daß zwischen Schaufelende und Gehäusewand ein Spalt vorhanden ist.

**13.** Verwendung nach einem der Ansprüche 7 bis 12, **dadurch gekennzeichnet, daß** das Gehäuse (1) mit innenliegender Antriebswelle (3) und Schaufeln (4) in einem Kasten (6) angeordnet sind, welche aufgabeseitig eine Einlaßöffnung (7) für die zu trennende Mischung und am anderen Ende eine Auslaßöffnung (8) für den im Inneren der Trommel verbleibenden und durch die rotierenden Schaufeln geförderten Kunststoff aufweist.

**Claims**

**1.** A process for the dry separation of viscoplastic materials such as plastics and rubber from materials defiberizing under mechanical stress, namely paper, pasteboard, cardboard and other cellulose-containing materials, wherein the materials to be separated are subjected to high acceleration and impact forces in radial, axial and tangential directions, and a mass flow of fibrous material and a mass flow of viscoplastic materials are withdrawn separately, **characterized in that** the viscoplastic materials and the cellulose-containing materials are present essentially as composite materials, and only the fibrous material will be defiberized under the action of said forces and separated from the viscoplastic material, the viscoplastic materials being withdrawn in said mass flow in an essentially non-shredded state.

**2.** The process according to claim 1, **characterized in that** the mixture to be separated is pre-shredded to a particle size of ≤ 50 mm.

**3.** The process according to one of claims 1 or 2, **characterized in that** the fibrous material is defiberized in a casing (1), and the defiberized material, particularly paper, is discharged through borings or outlets (2) in a jacket surface of said casing (1), while the viscoplastic materials remain in the casing (1), being withdrawn as a separate flow at the end of same.

**4.** The process according to claim 3, **characterized in that** the defiberizing effect is enhanced by sharp edges arranged at the borings or outlets (2) at one interior surface of the casing (1).

**5.** The process according to claim 3 or 4, **characterized in that** the defiberizing effect is enhanced by designing the casing (1) in a polygonal shape.

**6.** The process according to one of claims 3 through 5, **characterized in that** the material flow/transport in casing (1) results from the direct influence of the devices (1, 3, 4) producing said radial, axial and tangential acceleration forces.

**7.** Use of a device for dry separation of viscoplastic materials such as plastics and rubber from materials defiberizing under mechanical stress, especially paper, pasteboard, cardboard and other cellulose-containing materials, wherein the materials to be separated are subjected to high acceleration and impact forces in radial, axial and tangential directions, and a mass flow of fibrous material and a mass flow of viscoplastic materials are withdrawn separately, consisting of a screen basket (1) which is essentially cylindrical in shape and has borings or outlets (2) in a jacket, allowing the defiberized material to pass through, the borings (2) at one interior surface of the screen basket (1) having sharp edges to enhance the defiberizing effect, a rotatable driving shaft (3) being arranged coaxially in an inner zone of the screen basket, with blades (4) being attached to said driving shaft, the viscoplastic materials being withdrawn in an essentially non-shredded state in a separate mass flow, to separate composite materials comprising viscoplastic materials and materials defiberizing under mechanical stress, the rotational speed of said blades being adjustable within a range of from 1200 to 1800 rpm, so that only the fibrous material will be defiberized and separated from the viscoplastic material.

**8.** Use according to claim 7, **characterized in that** the screen basket has a polygonal shape.

**9.** Use according to claim 7 or 8, **characterized in that** the blades (4) are in rigid connection with said driving shaft.

**10.** Use according to one of claims 7 through 9, **characterized in that** the blades (4) are attached to the driving shaft at an inclination angle of preferably 5-7 degrees.

**11.** Use according to one of claims 7 through 10, **characterized in that** the blades (4) at the charging side are smaller in diameter than the following blades.

**12.** Use according to one of claims 7 through 11, **characterized in that** the blades (4) are arranged on the driving shaft in such a way as to leave a gap between the blade ends and the casing wall.

**13.** Use according to one of claims 7 through 12, **characterized in that** the casing (1) with interior driving shaft (3) and blades (4) is arranged in a box (6) having a charging inlet (7) at the charging side for the mixture to be separated, and an outlet (8) at the other end for the plastics remaining in the drum and being conveyed by the rotating blades.

**Revendications**

**1.** Procédé pour séparer à sec des matériaux viscoélastiques, tels que les matières plastiques et le caoutchouc, de matériaux se défibrant sous des sollicitations mécaniques, à savoir le papier, la pâte à papier, le carton et d'autres matériaux cellulosiques, les matériaux à séparer étant soumis à d'importantes forces d'accélération radiales, axiales et tangentielles et à des forces de percussion, et un écoulement massique constitué de matériau fibreux ainsi qu'un écoulement massique constitué de matériaux viscoélastiques sont extraits séparément, **caractérisé en ce que** les matériaux viscoélastiques et les matériaux cellulosiques se présentent essentiellement comme matériaux composites, et seul le matériau contenant des fibres est défibré sous l'action des forces et est séparé du matériau viscoélastique, les matériaux viscoélastiques étant extraits essentiellement dans un état non déchiqueté dans l'écoulement massique.

**2.** Procédé selon la revendication 1, **caractérisé en ce que** le mélange séparé est prédéchiqueté à une taille de particules ≤ 50 mm.

**3.** Procédé selon l'une des revendications 1 ou 2, **caractérisé en ce que** le matériau contenant des fibres est défibré à l'intérieur d'un boîtier (1), et le matériau défibré, en particulier du papier, sort vers l'extérieur par des alésages ou des sorties (2) ménagées dans une surface d'enveloppe du boîtier (1), tandis que les matériaux viscoélastiques restent à l'intérieur du boîtier (1) et sont extraits à son extrémité en tant qu'écoulement séparé.

**4.** Procédé selon la revendication 3, **caractérisé en ce que** l'effet de défibrage est renforcé par des bords tranchants disposés d'un côté intérieur du boîtier (1) sur les alésages ou sorties (2).

**5.** Procédé selon la revendication 3 ou 4, **caractérisé en ce que** l'effet de défibrage est renforcé par la configuration du boîtier (1) en une forme polygonale.

**6.** Procédé selon l'une des revendications 3 à 5, **caractérisé en ce que** le transport du matériau à l'intérieur du boîtier (1) est provoqué par l'influence directe des dispositifs (1, 3, 4) exerçant les forces d'accélération radiales, axiales et tangentielles.

**7.** Utilisation d'un dispositif pour séparer à sec des matériaux viscoélastiques, tels que les matières plastiques et le caoutchouc, de matériaux se défibrant sous des sollicitations mécaniques, à savoir le papier, la pâte à papier, le carton et d'autres matériaux cellulosiques, les matériaux à séparer étant soumis à d'importantes forces d'accélération radiales, axiales et tangentielles et à des forces de percussion, et un écoulement massique constitué de matériau fibreux ainsi qu'un écoulement massique constitué de matériaux viscoélastiques sont extraits séparément, constitué d'un panier tamiseur (1) qui présente une forme essentiellement cylindrique et qui présente dans une enveloppe des alésages ou sorties (2) pour la traversée du matériau à défibrer, les alésages (2) présentant sur un côté intérieur du panier tamiseur (1) des bords tranchants pour renforcer l'effet de défibrage, et un arbre rotatif d'entraînement (3) est disposé coaxialement dans une zone intérieure du panier tamiseur, des pales (4) reliées à l'arbre d'entraînement étant fixées sur l'arbre d'entraînement, les matériaux viscoélastiques étant extraits dans un écoulement massique séparé, essentiellement dans un état non déchiqueté, pour la séparation de matériaux composites en matériaux viscoélastiques et en matériaux se défibrant sous des sollicitations mécaniques, la vitesse de rotation des pales pouvant être réglée dans une plage de 1 200 à 1 800 tours par minute de manière à ce que seul le matériau contenant des fibres soit défibré et soit séparé du matériau viscoélastique.

**8.** Utilisation selon la revendication 7, **caractérisée en ce que** le panier tamiseur présente une forme polygonale.

**9.** Utilisation selon la revendication 7 ou 8, **caractérisée en ce que** les pales (4) sont reliées fixement à l'arbre d'entraînement.

**10.** Utilisation selon la revendication 7 à 9, **caractérisée en ce que** les pales (4) sont fixées à un angle d'inclinaison de préférence de 5 à 7 degrés sur l'arbre d'entraînement.

**11.** Utilisation selon l'une des revendications 7 à 10, **caractérisée en ce que** les pales (4) situées du côté de l'alimentation présentent un diamètre plus petit que celui des pales suivantes.

**12.** Utilisation selon l'une des revendications 7 à 11, **caractérisée en ce que** les pales (4) sont disposées sur l'arbre d'entraînement de telle sorte qu'entre l'extrémité des pales et la paroi du boîtier un interstice soit formé.

**13.** Utilisation selon l'une des revendications 7 à 12, **caractérisée en ce que** le boîtier (1) avec l'arbre d'entraînement (3) situé à l'intérieur et les pales (4) sont disposés dans un caisson (6) qui du côté de l'alimentation présente une ouverture d'introduction (7) du mélange à séparer et à l'autre extrémité une ouverture d'extraction (8) pour la matière plastique restant à l'intérieur du tambour et transportée par les pales en rotation.

Ansicht A A'

Fig. 1

Fig. 2